# EUROPÄISCHE PATENTANMELDUNG

(11) **EP 0 579 009 A1**
(43) Veröffentlichungstag der Anmeldung: **19.01.1994**
(21) Anmeldenummer: 93110083.8
(22) Anmeldetag: 24.06.1993
(51) Int. Cl.: C03B 3/00

(54) **Verfahren und Vorrichtung zum Einlegen von Chargiermaterial in Glasschmelzöfen**

(30) Priorität: 15.07.1992 DE 4223184
(71) Anmelder: Beteiligungen Sorg GmbH & Co. KG, D-97816 Lohr (DE)
(72) Erfinder: Bucar, Matjaz, D-8781 Karsbach (DE)
(74) Vertreter: Zapfe, Hans, Dipl.-Ing.

(57) **Zusammenfassung**

Bei einem Verfahren und einer Vorrichtung zum Einlegen von Chargiermaterial durch einen Hitzeschild (12) hindurch auf die Schmelzbadoberfläche von Glasschmelzöfen ist mindestens ein plattenförmiger Schieber (16) vorhanden, der eine parallel zur Schmelzbadoberfläche verlaufende Unterkante besitzt und Schieberbewegungen mit waagrechten und senkrechten Komponenten ausführt. Um dabei eine bessere Abdichtung des Ofeninnenraums zu erreichen, führt der außermittig an einem Schieberträger (15) mit Kreisquerschnitt befestigte Schieber (16) durch Überlagerung von Dreh- und Längsbewegungen des Schieberträgers (15) und durch eine entsprechende Steuerung des Schieberantriebs (30, 31) überlagerte Schwenkbewegungen um die Achse des Schieberträgers (15) aus. Bei paralleler Lage seiner Unterkante zur Schmelzbadoberfläche und teilweise in diese eingetaucht wird eine Vorschubbewegung zum Glasschmelzofen hin und bei hochgeschwenkter, aufgetauchter Stellung der Unterkante eine Rückzugsbewegung ausgeführt. Dabei ist der Schieberträger durch eine Stopfbuchsdurchführung im Hitzeschild (12) hindurchgeführt, und auch die vorhandene Chargiereinrichtung ist allseitig abgedichtet von einer Chargierkammer umgeben, die abgedichtet auch mit dem Hitzeschild (12) verbunden ist.

## Beschreibung

Die Erfindung betrifft ein Verfahren zum Einlegen von Chargiermaterial aus einem Chargenbehälter durch einen Hitzeschild und eine Einlegeöffnung auf die Schmelzbadoberfläche von Glasschmelzöfen mittels mindestens eines plattenförmigen Schiebers, der eine parallel zur Schmelzbadoberfläche verlaufende Unterkante besitzt und Schieberbewegungen mit waagrechten und senkrechten Komponenten ausführt, während laufend Chargiermaterial auf die Schmelzbadoberfläche aufgegeben wird.

Bei den herkömmlichen Chargierverfahren wird der Schieber so bewegt, daß seine Unterkante stets parallel zu ihrer Ausgangslage mit vertikalen und horizontalen Bewegungskomponenten verlagert wird.

Durch die DE-PS 37 09 178 ist es bekannt, die besagte Unterkante durch ein paralleles Führungssystem mit zwei Schieberträgern auf einer rechteckigen Bahn zu führen. Hierdurch wird das kontinuierlich zugeführte Chargiermaterial in einzelne streifenförmige Portionen unterteilt, die auf der Schmelzbadoberfläche liegen, allmählich in diese absinken und aufgeschmolzen werden. Obwohl bei dem bekannten Verfahren eine sehr genaue Verfahrensführung möglich ist, läßt sich der Innenraum des Glasschmelzofens nur sehr ungenügend gegenüber der Atmosphäre abdichten. Die Abdichtung der Schieberträger gegenüber dem Hitzeschild geschieht bei der bekannten Lösung durch Abdeckplatten, die oszillierende Bewegungen auf schlitzförmigen Ausnehmungen im Hitzeschild ausführen. Infolge der hohen Betriebstemperaturen der aufeinander gleitenden Oberflächen tritt hierbei ein erheblicher Verschleiß auf. Gleichfalls unbefriedigend ist die Abdichtung der als Vibrationsförderrinne ausgebildeten Chargiereinrichtung gegenüber dem Hitzeschild. Die bekannte Lösung besitzt zudem den Nachteil, daß das Chargiermaterial stets nur in senkrechter Richtung zur gegenüberliegenden Ofenwand verschoben wird, so daß das Chargiermaterial bei einer großen Beschickungsmenge pro Zeiteinheit Gefahr läuft, gegen die gegenüberliegende Ofenwand gefördert zu werden.

Die Abdichtung zwischen der Einlegevorrichtung und dem Innenraum des Ofens, dessen Beschickungszone im Bereich der Einlegevorrichtung in der Regel als sogenanntes "Dog-House" ausgebildet ist, ist insbesondere bei brennstofffbeheizten Glas-Wannenöfen von besonderer Bedeutung. In unzulässiger Menge angesaugte Falschluft stört den Verbrennungsprozeß, verschlechtert dessen Wirkungsgrad und führt zudem zu einer Abkühlung des Ofeninhalts an der Stelle, an der das Aufschmelzen erfolgen soll. Außerdem vergrößert die Falschluft die Abgasmenge, so daß die Abgasfilter entsprechend größer ausgelegt werden müssen und dennoch einen höheren Strömungswiderstand erzeugen.

Der Erfindung liegt daher die Aufgabe zugrunde, ein Einlegeverfahren für Chargiermaterial, das sogenannte "Gemenge", der eingangs beschriebenen Gattung anzugeben, das eine zuverlässige Beschickung des Glasschmelzofens bei gleichzeitig guter Abdichtung der Durchführungen durch den Hitzeschild ermöglicht. Bei der Bewertung dieser Aufgabe ist zu berücksichtigen, daß beim gesamten Stand der Technik, soweit sich dieser überhaupt mit abgedichteten Durchführungen durch den Hitzeschild befaßt, die erforderlichen Freiheitsgrade einerseits und die gute Abdichtwirkung andererseits einander diametral entgegenstanden.

Die Lösung der gestellten Aufgabe erfolgt nunmehr erfindungsgemäß dadurch, daß mittels des außermittig an einem Schieberträger mit Kreisquerschnitt befestigten Schiebers durch Überlagerung von Dreh- und Längsbewegungen des Schieberträgers sowie durch eine Steuerung des Schieberantriebs bei paralleler Lage seiner Unterkante zur Schmelzbadoberfläche und teilweise in diese eingetaucht eine Vorschubbewegung zum Glasschmelzofen hin und bei hochgeschwenkter, aufgetauchter Stellung der Unterkante eine Rückzugsbewegung ausgeführt wird.

Mit dem erfindungsgemäßen Einlegeverfahren ist es möglich, einerseits eine sehr genaue Chargierung des Glasschmelzofens durchzuführen, wie sie auch mit der Einlegevorrichtung nach der DE-PS 37 09 178 möglich ist, andererseits aber zusätzlich eine sehr gute Abdichtung des einzigen Schieberträgers pro Schieber gegenüber dem Hitzeschild zu gewährleisten, indem der Schieberträger an der Abdichtstelle eine Linearbewegung ausführt, die von einer Rotationsbewegung um die gleiche Achse überlagert ist. Der Schieberträger braucht also an der Durchführungs- und Abdichtstelle keine Schwenk-, Verschiebe- oder Taumelbewegungen auszuführen, so daß eine sehr dichte Abdichtung durch eine Stopfbuchsdichtung möglich ist, die ohne Probleme auch mehrstufig ausgeführt werden kann.

Dies hat zur Folge, daß der Verbrennungsvorgang innerhalb des Ofens nicht mehr durch den Chargiervorgang durch gleichzeitigen Eintritt von Falschluft beeinträchtigt wird.

Das erfindungsgemäße Einlegeverfahren läßt sich noch dadurch weiter vervollkommnen, daß zwei in spiegelsymmetrischer Anordnung vorhandene Schieber unabhängig voneinander so gesteuert werden, daß der Vorschubschritt in eingetauchtem Zustand und/oder die Vorschubfrequenz beider Schieberantriebe voneinander verschieden ist bzw. sind.

Es ist also möglich, denen einen der beiden Schieber in eingetauchtem Zustand mit einem geringeren Vorschubschritt zu betreiben und/oder mit einer kleineren Vorschubfrequenz als den anderen der beiden Schieber. Der Schieber wird also gewissermaßen in der senkrechten Mittenebene der Einlegevorrichtung geteilt und mit unterschiedlichen Förderleistungen an beiden Schiebern betrieben. Dies hat zur Folge, daß das Chargiermaterial bzw. Gemenge sich unter einstellbaren Winkeln zu den beiden Schieberträgern bewegt, so daß die Überlagerung einer horizontalen Schwenkbewegung der gesamten Einlegevorrichtung völlig überflüssig wird. Dadurch kann ein Glasschmelzofen mit einer geringeren Zahl von Einlegevorrichtungen betrieben werden, die ihrerseits aber eine hohe Förderleistung haben, ohne daß das auf der Glasschmelze verschobene Chargiermaterial Gefahr läuft, die gegenüberliegende Wand des Ofens bzw. des Dog-House zu erreichen. Das Chargiermaterial läßt sich im Ergebnis durch periodische Veränderung der anteiligen Förderleistungen beider Schieber im zeitlichen Mittel auf einen Winkelsektor verteilen.

Die Erfindung betrifft auch eine Einlegevorrichtung zur Aufgabe und Verteilung von Chargiermaterial durch eine Einlegeöffnung auf die Schmelzbadoberfläche von Glasschmelzöfen mit einem beweglichen Gestell, das einen Chargenbehälter, eine Chargiereinrichtung, einen hiervon getrennten, im wesentlichen waagrecht ausgerichteten Schieberträger aufweist, an dem ein plattenförmiger Schieber mit einer in Vorschubrichtung parallel zur Schmelzbadoberfläche verlaufenden Unterkante angeordnet ist, das ferner einen Schieberantrieb für die Erzeugung einer Schieberbewegung mit waagrechten und senkrechten Komponenten und einen die Einlegeöffnung im wesentlichen abdeckenden Hitzeschild aufweist, in dem eine Ausnehmung zum Durchtritt der Chargiereinrichtung und mindestens eine abgedichtete Durchführung für den Schieberträger angeordnet ist.

Eine solche Einlegevorrichtung ist zur Lösung der gleichen Aufgabe erfindungsgemäß dadurch gekennzeichnet, daß
a) der Schieber außermittig an einem einzigen Schieberträger mit Kreisquerschnitt angeordnet ist, derart, daß durch eine Drehbewegung des Schieberträgers die Unterkante des Schiebers in eine hochgeschwenkte Stellung außer Eingriff mit der Schmelzbadoberfläche bringbar ist,
b) in dem Hitzeschild radial unbeweglich und abgedichtet eine Stopfbuchsdurchführung angeordnet ist, in der der Schieberträger ausschließlich drehbar und axial verschiebbar ist,
c) der Schieberantrieb so ausgelegt ist, daß er bei paralleler Lage der Unterkante des Schiebers zur Schmelzbadoberfläche eine Vorschubbewegung des Schiebers zum Glasschmelzofen hin und bei hochgeschwenkter Stellung der Unterkante eine Rückzugsbewegung des Schiebers ausführt, und daß schließlich
d) die Chargiereinrichtung von einer Chargierkammer umgeben ist, von der eine erste Öffnung abgedichtet mit dem Randbereich der Ausnehmung im Hitzeschild und über eine zweite Öffnung abgedichtet mit dem Chargenbehälter verbunden ist, und einen Chargierantrieb aufweist, der außerhalb der Chargierkammer angeordnet ist und dessen Antriebsstange über eine weitere Stopfbuchsdurchführung in die Chargierkammer eingeführt und dort mit der Chargiereinrichtung verbunden ist.

Mit einer solchen Bauweise einer Einlegevorrichtung sind die Vorteile verbunden, daß bei einfacher Ausführung eine gute Abdichtung nicht nur zwischen Schieberträger und Hitzeschild erreicht wird, sondern gleichzeitig auch eine gute Abdichtung zwischen der Chargiereinrichtung und dem Hitzeschild.

Bezüglich der Chargiereinrichtung ist Kernstück des Abdichtsystems die angegebene Chargierkammer, die sowohl gegenüber dem Hitzeschild als auch gegenüber allen anderen Ein- und Durchführungen abgedichtet ist. Nachzutragen wäre hier, daß selbstverständlich auch die Abdichtung zwischen Chargenbehälter und Chargierkammer gewährleistet ist und zwar besonders zweckmäßig durch eine flexible Verbindung durch einen Faltenbalg aus hitzebeständigen, insbesondere mineralischen Fasern.

Als "Chargiereinrichtung" können zum Einsatz kommen, z.B. eine Vibrationsförderrinne, eine Einlegeschurre oder dergleichen.

Es ist dabei zur Bestreichung eines Winkelsektors innerhalb des Beschickungsbereichs von besonderem Vorteil, wenn auf beiden Seiten einer senkrechten Mittenebene der Einlegevorrichtung je ein Schieberträger angeordnet ist und wenn an den Enden der Schieberträger - in der Ansicht in Richtung der Achsen der Schieberträger - in spiegelsymmetrischer Anordnung und mit spiegelsymmetrischer Bewegungsmöglichkeit zwei außermittig gehaltene Schieber befestigt sind, deren den Schieberträgern abgekehrten Enden vor der Herbeiführung einer Vorschubbewegung aufeinander ausrichtbar sind.

Durch die Zuordnung unabhängig voneinander ansteuerbarer Schieberantriebe zu den beiden Schiebern ist es alsdann möglich, mittels jedes einzelnen der beiden Schieber unterschiedliche Förderströme an Chargiermaterial bzw. Gemenge einzustellen, die an beiden Schiebern periodisch veränderbar sind, so daß die genannte oszillierende Beschickung innerhalb des Winkelsektors möglich ist.

Es ist weiterhin von Vorteil, wenn Schieberträger und Schieberantrieb als Einbauten jeweils in einem zumindest weitgehend geschlossenen Antriebsgehäuse untergebracht sind, das als Ganzes mit den Einbauten von dem beweglichen Gestell abnehmbar ist.

Dieses Gehäuse mit seinen Einbauten stellt gewissermaßen ein Antriebsmodul für den betreffenden Schieber dar, so daß eine derartige Einlegevorrichtung wahlweise mit einem oder mit zwei Schieberträgern und Schieberantrieben bestückt werden kann.

Es ist wiederum von Vorteil, wenn die Chargierkammer mit der Chargiereinrichtung und dem Chargierantrieb als Ganzes von dem besagten beweglichen Gestell abnehmbar ist. Auch die Chargierkammer bildet in diesem Fall ein Chargiermodul, das auch mit anderen Antriebssystemen wahlweise kombinierbar ist.

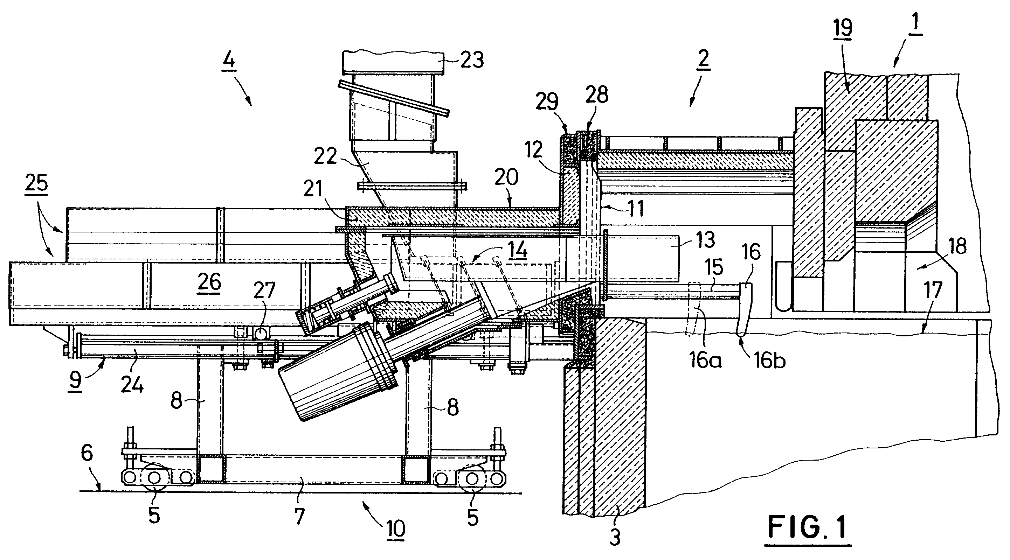

Weitere vorteilhafte Ausgestaltungen des Erfindungsgegenstandes ergeben sich aus den übrigen Unteransprüchen, deren vorteilhafte Einzelmerkmale in der nachfolgenden Detailbeschreibung und anhand der Figuren 1 bis 8 anhand zweier Ausführungsbeispiele mit Vibrationsförderrinne näher erläutert werden.

Es zeigen:
- Figur 1: einen vertikalen Längsschnitt durch einen Teil eines Glasschmelzofens im Bereich des Dog-House in Verbindung mit einem Längsschnitt in gleicher Ebene durch die Einlegevorrichtung,
- Figur 2: einen Horizontalschnitt durch den Gegenstand von Figur 1 entlang einer Ebene, die knapp oberhalb der Chargiereinrichtung liegt,
- Figur 3: einen vertikalen Querschnitt durch den Glasschmelzofen im Bereich des Dog-House mit Blick auf die Einlegevorrichtung in leicht vergrößertem Maßstab,
- Figur 4: einen teilweisen Vertikalschnitt durch das Antriebsgehäuse mit dem Schieberantrieb sowie durch den Schieberträger im Bereich des Hitzeschildes,
- Figur 5: einen Querschnitt durch den Schieberträger an der Stelle V in Figur 4,
- Figur 6: eine Variante des Gegenstandes nach den Figuren 1 bis 4 mit zwei Schiebern und zwei Antriebsgehäusen in einer analogen Darstellung wie in Figur 2 (Horizontalschnitt),
- Figur 7: einen Einblick in das Dog-House mit Blickrichtung auf die Einlegevorrichtung bei der Ausführungsform nach Figur 6 in einer zeichnerischen Darstellung analog Figur 3 (Vertikalschnitt) und
- Figur 8: eine Ausschnittvergrößerung aus Figur 1 im Bereich der Chargierkammer der Einlegevorrichtung und des Hitzeschildes des Dog-House.

In Figur 1 ist derjenige Teil eines Glasschmelzofens 1 dargestellt, an den sich das sogenannte Dog-House 2 anschließt. Es handelt sich um bekannte Konstruktionsdetails von Glasschmelzöfen mit einer Schmelzwanne 3, so daß sich ein weiteres Eingehen auf dieses Details erübrigt.

An das Dog-House 2 stößt eine Einlegevorrichtung 4 an, die in Richtung der Ofen-Längsachse mittels Fahrrollen 5 auf Schienen 6 verfahrbar ist. Die Fahrrollen 5 sind höhenverstellbar an einem Grundrahmen 7 befestigt, der über Tragsäulen 8 mit einer Montageplattform 9 verbunden ist, auf der die nachstehend noch näher beschriebenen Teile und Baugruppen befestigt sind. Grundrahmen und Montageplattform bilden das sogenannte bewegliche Gestell 10, mit dem die Einlegevorrichtung 4 an die Einlegeöffnung des Glasschmelzofens heranfahrbar ist.

Das Dog-House 2 besitzt eine Einlegeöffnung 11, die im Schmelzbetrieb des Ofens durch einen Hitzeschild 12 verschlossen ist. Durch entsprechende Ausnehmungen im Hitzeschild 12 ragen die vorderen Enden einer Chargiereinrichtung 14, und eines Schieberträgers 15, an dessen vorderem Ende sich ein Schieber 16 befindet, in das Dog-House 2 hinein. Im vorliegenden Fall ist die Chargiereinrichtung 14 als Vibrationsförderrinne 13 ausgebildet. Der Schieber 16 ist durch den nachstehend noch zu erläuternden Schieberantrieb aus der ausgezogenen dargestellten Position in die gestrichelt dargestellte Position 16a verschiebbar. Der Schieber 16 besitzt eine Unterkante 16b, die beim Vorschub geringfügig unter die Schmelzbadoberfläche 17 eingetaucht ist und in dieser Position parallel zur Schmelzbadoberfläche verläuft. Durch mehr oder weniger periodische Bewegung des Schiebers 16 wird das aus der Vibrationsförderrinne 13 herabfallende Chargiermaterial in Form von Gemengestreifen unterteilt, die durch eine Öffnung 18 in einer Trennwand 19 zwischen Glasschmelzofen und Dog-House 2 in den eigentlichen Glasschmelzofen eingeschoben werden.

Außerhalb des Hitzeschildes 12 ist mit dieser abgedichtet eine Chargierkammer 20 verbunden, in die die Vibrationsförderrinne 13 mit dem größten Teil ihrer Länge hineinragt. Durch eine Decke 21 der Chargierkammer 20 ist - gleichfalls abgedichtet - ein Trichter 22 hindurchgeführt, der mit seinem unteren Ende in die Vibrationsförderrinne 13 hineinragt. Das obere Ende des Trichters 22 ist mit einem Chargenbehälter 23 verbunden, von dem nur das untere Ende dargestellt ist.

Aus den Figuren 1, 2 und 3 ist ersichtlich, daß die Montageplattform 9 Längsträger 24 aufweist, auf denen unmittelbar oder mittelbar sowohl die Chargierkammer 20 als auch ein Gehäuse 25 angeordnet sind, in dem sich der Schieberantrieb 26 befindet, der nachstehend noch näher erläutert wird. Auf der Montageplattform 9 befindliche Baugruppen sind durch weitere Fahrrollen 27 relativ zum Gestell 10 in dessen Längsrichtung verfahrbar. Es ist Figur 1 noch zu entnehmen, daß das Dog-House 2 und der Hitzeschild 12 über Dichtungspackungen 28 bzw. 29 miteinander verbunden sind.

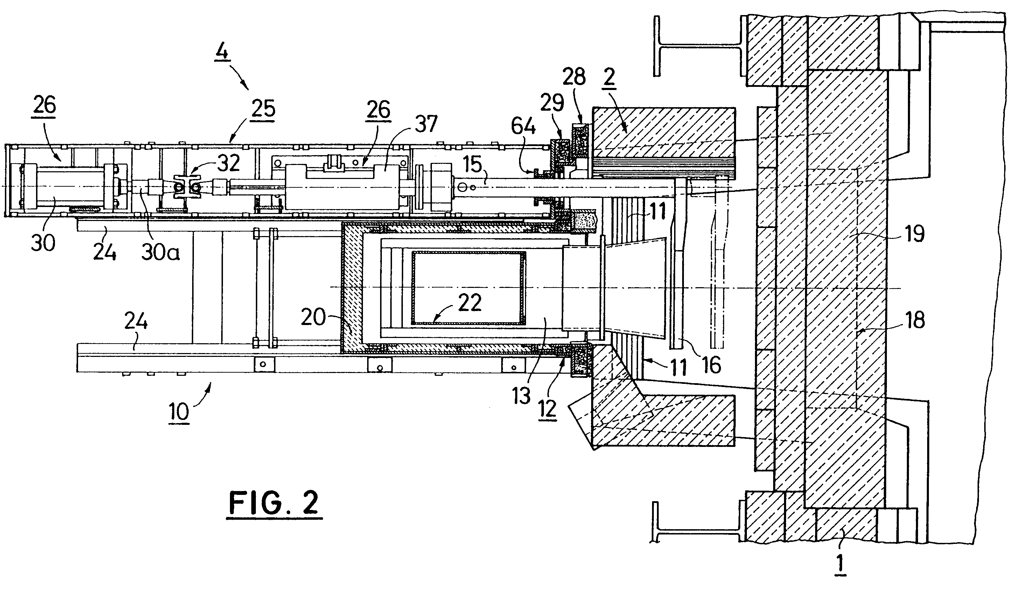

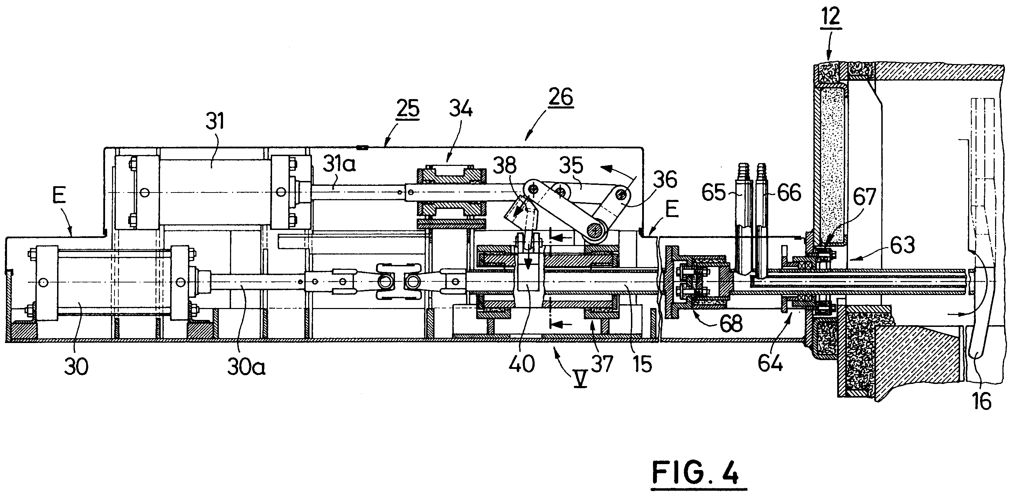

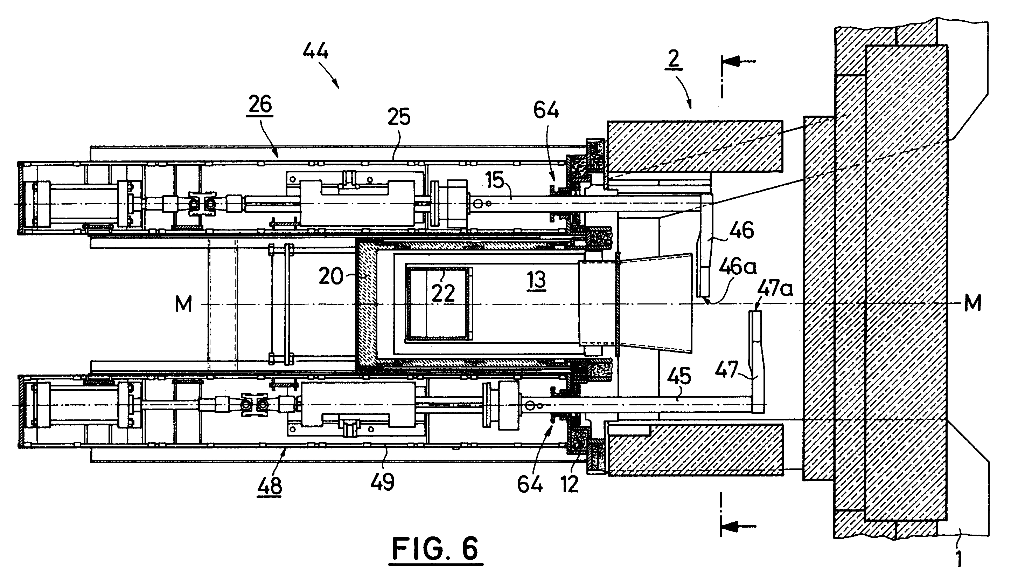

Gemäß Figur 4 besitzt der Schieberantrieb 26 zwei linear wirkende Antriebseinheiten 30 und 31, die etagenförmig übereinander angeordnet sind. Beide Antriebseinheiten sind Druckmittelantriebe mit Kolbenstangen 30a bzw. 31a. In Figur 2 ist die obere Etage des Schieberantriebs 26 weggelassen, bzw., das Antriebsgehäuse 25 wurde mit seinen Einbauten oberhalb einer Ebene E-E abgenommen.

Die Antriebseinheit 30 steuert die axiale Bewegung des Schieberträgers 15, und die Antriebseinheit 31 steuert dessen Rotationsbewegung. Um Fluchtfehler zwischen der Kolbenstange 30a, die mit dem Schieberträger 15 eine Drehung ausführen muß, und dem Schieberträger 15 selbst auszugleichen, befindet sich zwischen der Antriebseinheit 30 und dem Schieberträger 15 ein doppeltes Kardangelenk 32. Durch die Antriebseinheit 30 läßt sich der Schieber 16 zwischen den ausgezogen und den gestrichelt dargestellten Positionen hin und her bewegen.

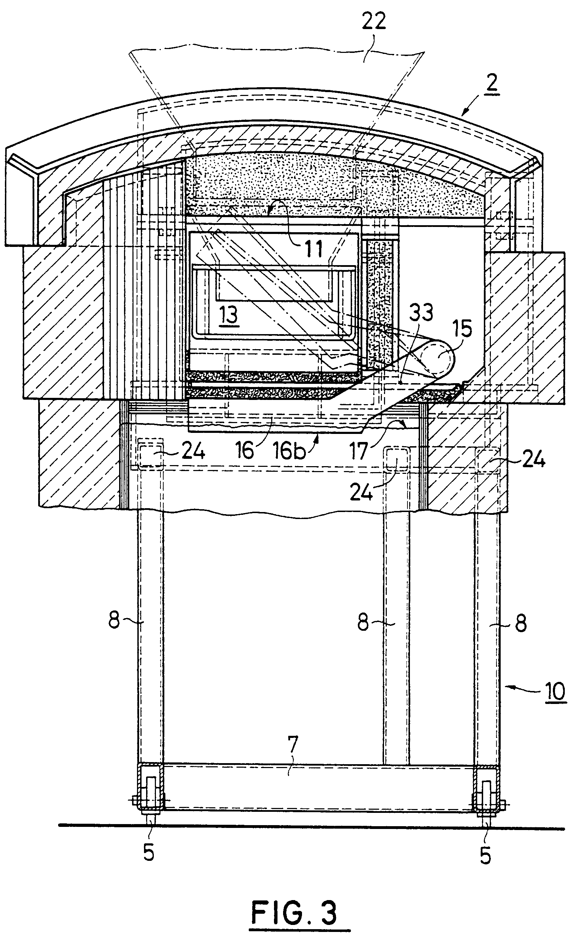

Aus Figur 3 ist zu entnehmen, daß der Schieber 16 außermittig, d.h. über einen Ausleger 33 am Schieberträger 15 befestigt ist und daß dieser Schieberträger einen Kreisquerschnitt hat. Durch eine Drehbewegung des Schieberträgers 15 ist nun die Unterkante 16b des Schiebers 16 aus der Glasschmelze heraushebbar und kann in eine hochgeschwenkte Stellung außer Eingriff mit der Schmelzbadoberfläche 17 gebracht werden. Zwei solcher möglichen hochgeschwenkten Stellungen sind in Figur 3 strichpunktiert angedeutet, und es ist erkennbar, daß der Schieber in der untersten gestrichelt dargestellten Position auch durch die Einlegeöffnung 11 aus dem Dog-House 2 herausgezogen werden kann, ohne an irgend einer Stelle anzustoßen. Die einen trogförmigen Querschnitt aufweisende Vibrationsförderrinne 13 ist auch in Figur 3 dargestellt, desgleichen die Unterkante des Trichters 22, die in die Vibrationsförderrinne 13 hineinragt. Es versteht sich, daß die Chargierkammer 20 mit der Vibrationsförderrinne 13 stets zusammen mit dem Schieber aus dem Dog-House zurückgezogen wird.

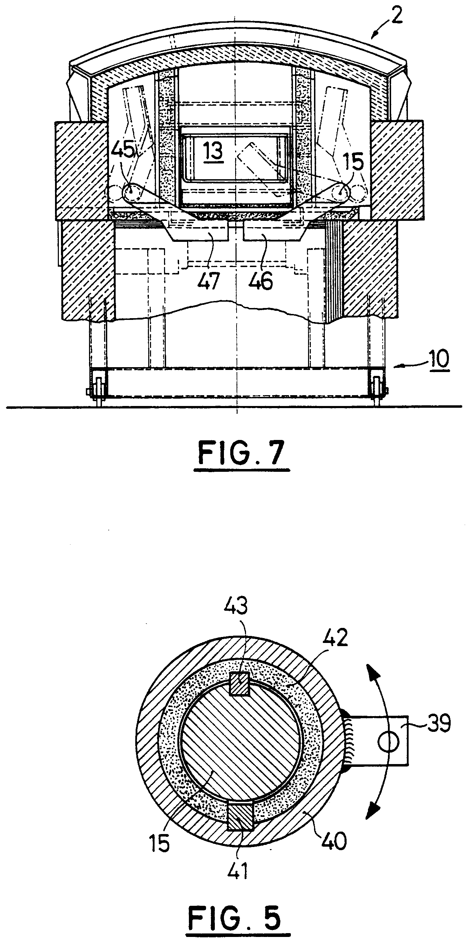

Die in Figur 3 bildlich dargestellte Verschwenkung des Schiebers 16 wird durch die in Figur 4 dargestellte linear wirkende Antriebseinheit 31 bewirkt, deren verlängerte Kolbenstange 31a zunächst durch eine Längsführung 34 stabilisiert wird. Die Kolbenstange 31a ist alsdann zum Ausgleich von vertikalen Querbewegungen über eine Lasche 35 mit einem starren Winkelhebel 36 verbunden, der in seinem Scheitel an einer nicht näher bezeichneten Lagerstelle ortsfest an einem Lagerbock 37 gelagert ist. In diesem Lagerbock ist im übrigen auch der Schieberträger 15 radial, aber axial verschiebbar, geführt. Das eine Ende des Winkelhebels 36 ist nun mit einer Gelenklasche 38 verbunden, deren dem Winkelhebel abgekehrtes Ende in einen Gabelhebel 39 eingreift, dessen Kraftübertragung auf den Schieberträger 15 in Figur 5 schematisch dargestellt ist. Der Gabelhebel 39 ist an einer Außenhülse 40 befestigt, die über eine Passfeder 41 zunächst auf eine Innenhülse 42 einwirkt, die das aufgebrachte Drehmoment ihrerseits über eine weitere Passfeder 43 auf den Schieberträger 15 überträgt. Diese Anordnung schafft die erforderlichen Freiheitsgrade für die Längsverschiebung des Schieberträgers 15 relativ zum Drehantrieb. Die Schwenkebene des starren Winkelhebels 36 verläuft parallel zur Achse der Linearbewegung bzw. parallel zur Zeichenebene gemäß Figur 4, aber senkrecht zur Zeichenebene gemäß Figur 2. Dadurch wirkt der Winkelhebel 36 über eine angenäherte Tangentialbewegung auf den Gabelhebel 39 ein; die erforderlichen Freiheitsgrade für eine Querbewegung sind durch das Vorhandensein der Gelenklasche 38 gewährleistet.

Wie aus den Figuren 6 und 7 hervorgeht, sind auf beiden Seiten einer senkrechten Mittenebene M-M einer modifizierten Einlegevorrichtung 44 je ein Schieberträger 15 bzw. 45 angeordnet, die an ihren in das Dog-House ragenden Enden mit Schiebern 46 und 47 versehen sind. Beide Schieber sind kürzer als der in Figur 3 gezeigte einzige Schieber 16, damit sich die den Schieberträgern 15 und 45 abgekehrten Enden 46a und 47a der Schieber 46 und 47 nicht behindern. Bei Ausführung einer Vorschubbewegung sind die besagten Enden 46a und 47a aufeinander zu gerichtet, allerdings nur dann, wenn synchrone Vorschubbewegungen ausgeführt werden. Es wurde aber bereits darauf hingewiesen, daß diese Vorschubbewegungen mit unterschiedlichem Hub (in der Eintauchstellung) bzw. mit unterschiedlicher Frequenz ausgeführt werden können, damit durch alternierende Umsteuerung der Förderleistung der beiden Schieber ein Winkelbereich mit periodischer Änderung der Förderrichtung bestrichen werden kann. Diese unterschiedliche Steuerungsmöglichkeit ist in Figur 6 gezeigt.

Im übrigen sind die beiden Schieberantriebe 26 und 48 spiegelsymmetrisch zur Mittenebene M-M aufgebaut und angeordnet, und zwar einschließlich der sie umgebenden Antriebsgehäuse 25 bzw. 49.

Speziell durch einen Vergleich der Figuren 2 und 6 läßt sich erkennen, daß die Einlegevorrichtungen 4 bzw. 44 in Modulbauweise ausgeführt sind, d.h. derartige Einlegevorrichtungen lassen sich auf einfache Weise um- oder nachrüsten. Beispielsweise kann die Einlegevorrichtung 4 nach Figur 2 durch Auswechseln des Schiebers 16 und zusätzlichen Anbau eines Antriebsgehäuse 49 mit Schieberantrieb 48 und Schieberträger 45 mit Schieber 47 erweitert werden. Bezüglich der Chargierkammer 20 und ihrer Ein- und Aufbauten sowie bezüglich der Vibrationsförderrinne 13 sind hierbei keine Änderungen vorgesehen.

Figur 7 zeigt das Aussehen der in das Dog-House 2 hineinragenden Teile der Einlegevorrichtung 44. Der Schieber 46 ist in analoger Weise ausgebildet wie der Schieber 16 in Figur 3, jedoch mit einer erheblich verkürzten Unterkante. Der andere Schieber 47 ist spiegelsymmetrisch ausgebildet und angeordnet, so daß sich zwischen den Enden 46a und 47a ein Abstand befindet. Auch in diesem Falle lassen sich die beiden Schieber 46 und 47 in hochgeschwenkte Stellungen verschwenken, die in mehreren möglichen Positionen strichpunktiert dargestellt sind.

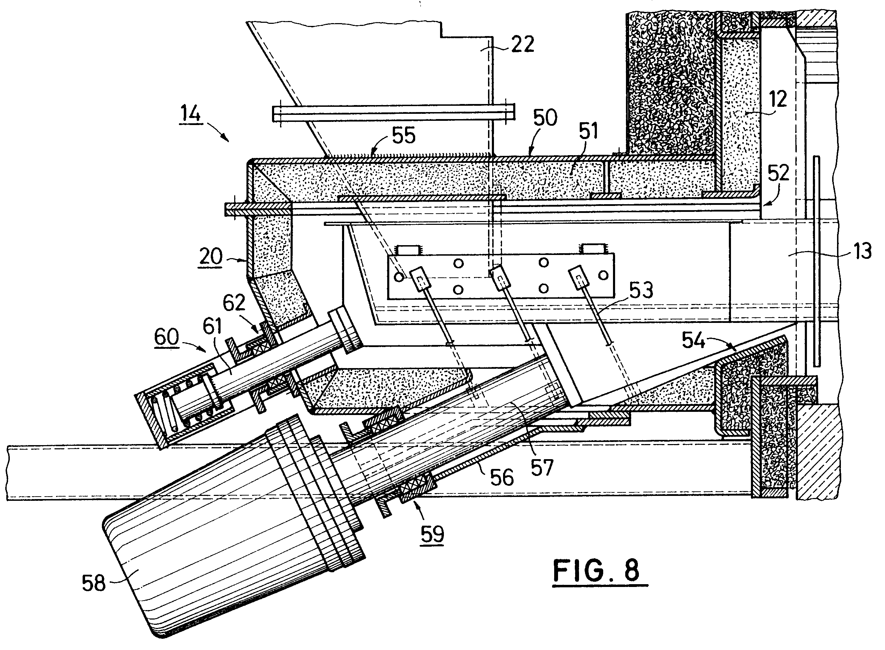

Die Konstruktionselemente der auch hier als Vibrationsförderrinne 13 ausgebildeten Chargiereinrichtung 14 sollen anhand der Figur 8 noch näher erläutert werden:
Die Chargierkammer 20 besteht aus einem metallischen Außenmantel 50 mit einer hitzebeständigen keramischen Auskleidung 51. Der Hitzeschild 12 besitzt im Bereich der Vibrationsförderrinne 13 eine Ausnehmung 52 für den Durchtritt der Vibrationsförderrinne 13, die über schrägstehende Blattfedern 53 an der Chargierkammer 20 befestigt ist.

Die Chargierkammer 20 besitzt für den Durchtritt der Vibrationsförderrinne 13 eine erste Öffnung 54, die mit der Ausnehmung 52 im Hitzeschild 12 im wesentlichen fluchtet. An dieser Stelle ist auch die Chargierkammer 20 mit dem Hitzeschild verbunden. Die Chargierkammer 20 besitzt eine zweite Öffnung 55, die hinter der Schnittebene gemäß Figur 8 liegt, und die abgedichtet über den Trichter 22 mit dem hier nicht dargestellten Chargenbehälter 23 verbunden ist.

Durch den Boden der Chargierkammer 20 ist mittels eines schräg angesetzten Rohrstutzens 56 eine Antriebsstange 57 eines Chargierantriebs 58 hindurchgeführt, der im vorliegenden Falle als Vibrationsantrieb ausgeführt ist. Die Antriebsstange 57 ist durch eine Stopfbuchsdurchführung 59 gegenüber der Chargierkammer 20 abgedichtet, so daß an dieser Stelle weder ein Gasaustritt noch ein Gaseintritt erfolgen kann. Das jenseitige Ende der Antriebsstange 57 ist mit der Vibrationsförderrinne 13 verbunden.

Wie aus Figur 8 ferner ersichtlich ist, ist die Vibrationsförderrinne 13 über eine zum Chargierantrieb 58 parallele Linearführung 60 mit der Chargierkammer 20 verbunden. Diese Linearführung besitzt eine Führungsstange 61, die gleichfalls über eine Stopfbuchsdurchführung 62 mit der Chargierkammer 20 verbunden ist.

In Figur 4 ist dargestellt, daß auch der Schieberträger 15 abgedichtet durch eine Durchführung 63 im Hitzeschild 12 hindurchgeführt ist. Während beim Stande der Technik schlitzförmige Durchführungen durch Gleitplatten abgedichtet werden mußten, ist die Durchführung 63 beim Erfindungsgegenstand gleichfalls durch eine mehrstufige Stopfbuchsdurchführung 64 abgedichtet, so daß auch an dieser Stelle kein unerwünschter Gasdurchtritt erfolgen kann. Die Schieberträger sowie die Schieber werden von Kühlwasser durchströmt. Zu diesem Zweck sind die Schieberträger doppelwandig bzw. als konzentrische Rohrleitungen ausgeführt und über seitliche Anschlußstutzen 65 und 66 mit einem hier nicht dargestellten Kühlmittelkreislauf verbunden.

Von ganz entscheidender Bedeutung ist jedoch, daß zwischen dem Hitzeschild 12 und der an diesem befestigten Stopfbuchsdurchführung 64 Isolierglieder 67 angeordnet sind. Ferner ist in dem außerhalb der Stopfbuchsdurchführung 64 und vor dem Antriebsgehäuse 25 liegenden Teilabschnitt des Schieberträgers 15 ein weiteres Isolierglied 68 angeordnet. Die Isolierglieder 67 und 68, deren Beschaffenheit nur andeutungsweise aus Figur 4 hervorgeht, bereiten dem Fachmann keine Schwierigkeiten; diese Isolierglieder dienen zur galvanischen Trennung der der Schmelze ausgesetzten Teile der Chargiervorrichtung vom vorgeschriebenen Massepotential. Auch die Anschlußstutzen 65 und 66 sind über flexible und isolierende Schläuche mit dem Kühlwasserkreislauf verbunden. Diese flexiblen Verbindungen ermöglichen auch die erforderliche Schwenkbewegung der Schieber, die maximal etwa 90 Grad betragen kann.

## Patentansprüche

1. Verfahren zum Einlegen von Chargiermaterial aus einem Chargenbehälter (23) durch einen Hitzeschild (12) und eine Einlegeöffnung (11) auf die Schmelzbadoberfläche (17) von Glasschmelzöfen (1) mittels mindestens eines plattenförmigen Schiebers (16, 46, 47), der eine parallel zur Schmelzbadoberfläche verlaufende Unterkante (16b) besitzt und Schieberbewegungen mit waagrechten und senkrechten Komponenten ausführt, während laufend Chargiermaterial auf die Schmelzbadoberfläche aufgegeben wird, **dadurch gekennzeichnet**, daß mittels des außermittig an einem Schieberträger (15, 45) mit Kreisquerschnitt befestigten Schiebers (16, 46, 47) durch Überlagerung von Dreh- und Längsbewegungen des Schieberträgers (15, 45) und durch eine Steuerung des Schieberantriebs (26, 48) bei paralleler Lage seiner Unterkante (16b) zur Schmelzbadoberfläche (17) und teilweise in diese eingetaucht eine Vorschubbewegung zum Glasschmelzofen (1) hin und bei hochgeschwenkter, aufgetauchter Stellung der Unterkante (16b) eine Rückzugsbewegung ausgeführt wird.

2. Verfahren nach Anspruch 1, **dadurch gekennzeichnet**, daß zwei in spiegelsymmetrischer Anordnung vorhandene Schieber (46, 47) unabhängig voneinander so gesteuert werden, daß der Vorschubschritt in eingetauchtem Zustand und/oder die Vorschubfrequenz beider Schieberantriebe (26, 48) voneinander verschieden ist bzw. sind.

3. Einlegevorrichtung (4, 44) zur Durchführung des Verfahrens nach Anspruch 1, mit einem beweglichen Gestell (10), das einen Chargenbehälter (23), eine Chargiereinrichtung (14), einen hiervon getrennten, im wesentlichen waagrecht ausgerichteten Schieberträger (15, 45) aufweist, an dem ein plattenförmiger Schieber (16, 46, 47) mit einer in Vorschubrichtung parallel zur Schmelzbadoberfläche verlaufenden Unterkante (16b) angeordnet ist, das ferner einen Schieberantrieb (26, 48) für die Erzeugung einer Schieberbewegung mit waagrechten und senkrechten Komponenten und einen die Einlegeöffnung (11) im wesentlichen abdeckenden Hitzeschild (12) aufweist, in dem eine Ausnehmung (52) zum Durchtritt der Chargiereinrichtung und mindestens eine abgedichtete Durchführung (63) für den Schieberträger (15, 46, 47) angeordnet ist, **dadurch gekennzeichnet**, daß
a) der Schieber (16, 46, 47) außermittig an einem einzigen Schieberträger (15, 45) mit Kreisquerschnitt angeordnet ist, derart, daß durch eine Drehbewegung des Schieberträgers (15, 45) die Unterkante (16b) des Schiebers (16, 46, 47) in eine hochgeschwenkte Stellung außer Eingriff mit der Schmelzbadoberfläche (17) bringbar ist,
b) in dem Hitzeschild (12) radial unbeweglich und abgedichtet eine Stopfbuchsdurchführung (64) angeordnet ist, in der der Schieberträger ausschließlich drehbar und axial verschiebbar ist,
c) der Schieberantrieb (26) so ausgelegt ist, daß er bei paralleler Lage der Unterkante (16b) des Schiebers (16) zur Schmelzbadoberfläche (17) eine Vorschubbewegung des Schiebers (16) zum Glasschmelzofen (1) hin und bei hochgeschwenkter Stellung der Unterkante (16b) eine Rückzugsbewegung des Schiebers ausführt, und daß
d) die Chargiereinrichtung (14) von einer Chargierkammer (20) umgeben ist, von der eine erste Öffnung (54) abgedichtet mit dem Randbereich der Ausnehmung (52) im Hitzeschild (12) und über eine zweite Öffnung (55) abgedichtet mit dem Chargenbehälter (23) verbunden ist, und einen Chargierantrieb (58) aufweist, der außerhalb der Chargierkammer (20) angeordnet ist und dessen Antriebsstange (57) über eine weitere Stopfbuchsdurchführung (59) in die Chargierkammer (20) eingeführt und dort mit der Chargiereinrichtung (14) verbunden ist.

4. Einlegevorrichtung nach Anspruch 3, **dadurch gekennzeichnet**, daß auf beiden Seiten einer senkrechten Mittenebene (M-M) der Einlegevorrichtung (44) je ein Schieberträger (15, 45) angeordnet ist und daß an den Enden der Schieberträger (15, 45) - in der Ansicht in Richtung der Achsen der Schieberträger - in spiegelsymmetrischer Anordnung und mit spiegelsymmetrischer Bewegungsmöglichkeit zwei außermittig gehaltene Schieber (46, 47) befestigt sind, deren den Schieberträgern abgekehrten Enden (46a, 47a) vor der Herbeiführung einer Vorschubbewegung aufeinander ausrichtbar sind.

5. Einlegevorrichtung nach Anspruch 4, **dadurch gekennzeichnet**, daß die beiden Schieber (46, 47) mit unabhängig voneinander ansteuerbaren Schieberantrieben (26, 48) verbunden sind.

6. Einlegevorrichtung nach Anspruch 3, **dadurch gekennzeichnet**, daß Schieberträger (15, 45) und Schieberantrieb (26, 48) als Einbauten jeweils in einem zumindest weitgehend geschlossenen Antriebsgehäuse (25, 49) untergebracht sind, das als Ganzes mit den Einbauten von dem beweglichen Gestell (10) abnehmbar ist.

7. Einlegevorrichtung nach Anspruch 3, **dadurch gekennzeichnet**, daß die Chargierkammer (20) mit der Chargiereinrichtung (14) und dem Chargierantrieb (58) als Ganzes von dem beweglichen Gestell (10) abnehmbar ist.

8. Einlegevorrichtung nach den Ansprüchen 6 und 7, **dadurch gekennzeichnet**, daß das bewegliche Gestell (10) eine von einem Grundrahmen (7) beabstandete, aus Längsträgern (24) gebildete, waagrechte Montageplattform (9) für Antriebsgehäuse (25, 49) und Chargierkammer (20) besitzt.

9. Einlegevorrichtung nach Anspruch 7, **dadurch gekennzeichnet**, daß der Chargierantrieb (58) für die Chargiereinrichtung (14) auf der dem Hitzeschild (12) abgekehrten Seite der Chargierkammer (20) angeordnet ist.

10. Einlegevorrichtung nach Anspruch 3, **dadurch gekennzeichnet**, daß die Chargierkammer (20) mit einer hitzebeständigen keramischen Auskleidung (51) versehen ist.

11. Einlegevorrichtung nach Anspruch 8, **dadurch gekennzeichnet**, daß die Chargierkammer (20) mittels Rollen (27) in Längsrichtung der Chargiereinrichtung (14) auf der Montageplattform (9) verfahrbar ist.

12. Einlegevorrichtung nach Anspruch 3, **dadurch gekennzeichnet**, daß die Chargiereinrichtung (14) über mindestens eine zum Chargierantrieb (58) parallele Linearführung (60) mit der Chargierkammer (20) verbunden ist.

13. Einlegevorrichtung nach Anspruch 3, **dadurch gekennzeich**net, daß der Schieberantrieb (26, 48) zwei linear wirkende Antriebseinheiten (30, 31) aufweist, von denen die eine (30) die axiale Bewegung des Schieberträgers (15) steuert und die andere (31) dessen Rotationsbewegung.

14. Einlegevorrichtung nach Anspruch 13, **dadurch gekennzeichnet**, daß der Schieberantrieb (26, 48) für die Rotationsbewegung über einen starren Winkelhebel (36) mit einer Gelenklasche (38) verbunden ist, deren dem Winkelhebel abgekehrtes Ende über eine angenäherte Tangentialbewegung auf einen mit dem Schieberträger (15, 45) verbundenen radialen Hebel (39) einwirkt und daß die Schwenkebene des starren Winkelhebels (36) parallel zur Achse der Linearbewegung ausgerichtet ist.

15. Einlegevorrichtung nach Anspruch 13, **dadurch gekennzeichnet**, daß die Antriebseinheit (30) für die Linearbewegung des Schieberträgers (15, 45) über ein doppeltes Kardangelenk (32) mit demjenigen Teil des Schiebeträgers (15, 45) verbunden ist, der zusätzlich zur Linearbewegung die überlagerte Rotationsbewegung ausführt.

16. Einlegevorrichtung nach Anspruch 6, **dadurch gekennzeichnet**, daß zwischen dem Hitzeschild (12) und der an diesem befestigten Stopfbuchsdurchführung (64) und in dem außerhalb der Stopfbuchsdurchführung (64) zwischen dieser und dem Antriebsgehäuse (25) liegenden Teilabschnitt des Schieberträgers (15, 45) jeweils Isolierglieder (67, 68) angeordnet sind.
